# EUROPÄISCHE PATENTSCHRIFT

(11) **EP 0 590 175 B1**
(45) Veröffentlichungstag und Bekanntmachung des Hinweises auf die Patenterteilung: **24.07.1996**
(21) Anmeldenummer: 92116560.1
(22) Anmeldetag: 28.09.1992
(51) Int. Cl.: G05B 19/042, G05B 19/414

(54) **Prozesssteuerungssystem**
System for controlling a process
Système de commande de processus

(43) Veröffentlichungstag der Anmeldung: 06.04.1994
(73) Patentinhaber: SIEMENS AKTIENGESELLSCHAFT, 80333 München (DE)
(72) Erfinder: Trummer, Georg, Dipl.-Ing. (FH), W-8450 Amberg (DE); Burger, Werner, Dipl.-Ing. (FH), W-8457 Kümmersbruck (DE)

(56) Entgegenhaltungen:
- EP-A- 0 088 805
- EP-A- 0 298 396
- EP-A- 0 496 097
- GB-A- 2 250 106
- IEEE TRANSACTIONS ON VEHICULAR TECHNOLOGY Bd. 39, Nr. 3, 1990, NEW YORK, US Seiten 271 - 276 KAMAL N. MAJEED 'Dual-Processor Controller with Vehicle Suspension Applications'

## Beschreibung

Die vorliegende Erfindung betrifft ein Prozeßsteuerungssystem, z. B. eine speicherprogrammierbare Steuerung, das aus einer Zentraleinheit und einer Anzahl peripherer Einrichtungen besteht, die mit der Zentraleinheit über ein Bussystem verbunden sind, wobei die Zentraleinheit mindestens ein Steuerungsprozessorsystem mit einem Steuerungsprozessor zur Bearbeitung von Echtzeitaufgaben sowie mindestens ein weiteres, vom Steuerungsprozessorsystem getrenntes Restprozessorsystem mit einem Restprozessor zur Bearbeitung von zeitungebundenen Aufgaben aufweist.

Prozeßsteuerungssysteme sind weit verbreitet. Sie haben in der Regel zwei Aufgaben zu erfüllen: Zum einen muß ein Anwenderprogramm in Echtzeit abgearbeitet werden. Zum andern muß mit der Außenwelt, z. B. anderen Prozeßsteuerungssystemen, kommuniziert werden, es müssen Programme nachgeladen werden und es muß mit den Peripherieeinrichtungen kommuniziert werden.

Die Wahrnehmung beider Aufgaben durch dieselbe Zentraleinheit führte bisher dazu, daß sich die beiden Aufgaben gegenseitig negativ beeinflußten. Insbesondere war die sogenannte Alarmreaktionszeit aufgrund der Wahrnehmung beider Aufgaben relativ hoch und zudem nicht exakt reproduzierbar. Da ein Teil der Rechenleistung für Kommunikations- und Verwaltungsaufgaben verwendet werden mußte, war die theoretisch mögliche Alarmreaktionszeit nicht erreichbar.

Aus der EP-A-O 496 097 ist ein Prozeßsteuerungssystem, wie sie oben beschrieben ist, bekannt. Auch bei diesem System kann die Wahrnehmung der beiden obenstehend erwähnten Aufgaben jedoch nicht getrennt voneinander erfolgen. Bei einem Zugriff des Kommunikationsprozessors auf das gemeinsame Bussystem muß nämlich die Abarbeitung des Anwenderprogramms durch den Steuerungsprozessor unterbrochen werden, da der gemeinsame Bus nur einfach vorhanden ist.

Aus der EP 0 298 396 A2 ist eine Prozessoreinheit mit zwei Prozessoren bekannt, wobei jeder Prozessor stets mit einem eigenen, ihm zugeordneten Bus und wahlweise auch mit dem dem jeweils anderen Prozessor zugeordneten Bus verbunden ist.

Aufgabe der vorliegenden Erfindung ist es, ein Prozeßsteuerungssystem zur Verfügung zu stellen, bei dem sich die beiden Prozessorsysteme möglichst wenig beeinflussen. Insbesondere soll die volle Kommunikationsleistung der Zentraleinheit ausnutzbar sein und trotzdem die Alarmreaktionszeit niedrig und reproduzierbar sein.

Die Aufgabe wird dadurch gelöst,
- daß das Bussystem einen Steuerungsbus und einen Restbus aufweist,
- daß der Steuerungsbus mit dem Steuerungsprozessorsystem und der Restbus mit dem Restprozessorsystem verbunden ist und
- daß zumindest ein Teil der peripheren Einheiten mit beiden Bussen verbunden ist.

Dadurch beeinflussen sich die Zugriffe der Prozessorsysteme auf die peripheren Einheiten nicht. Die Prozessorsysteme sind also nahezu vollständig voneinander entkoppelt.

Wenn das Steuerungsprozessorsystem und das Restprozessorsystem über sperrbare Koppelelemente, z. B. Tristate-HCMOS-Treiber, miteinander verbindbar sind, können die Prozessorsysteme auf das jeweils andere Prozessorsystem zugreifen.

Dieser Zugriff ist insbesondere im Anlauf des Prozeßsteuerungssystems nötig, damit Programme, die zentral gespeichert sind, in das jeweilige Prozessorsystem kopiert werden können.

Weitere Vorteile und Einzelheiten ergeben sich aus der nachfolgenden Beschreibung eines Ausführungsbeispiels, anhand der Zeichnungen und in Verbindung mit den weiteren Unteransprüchen. Dabei zeigen:

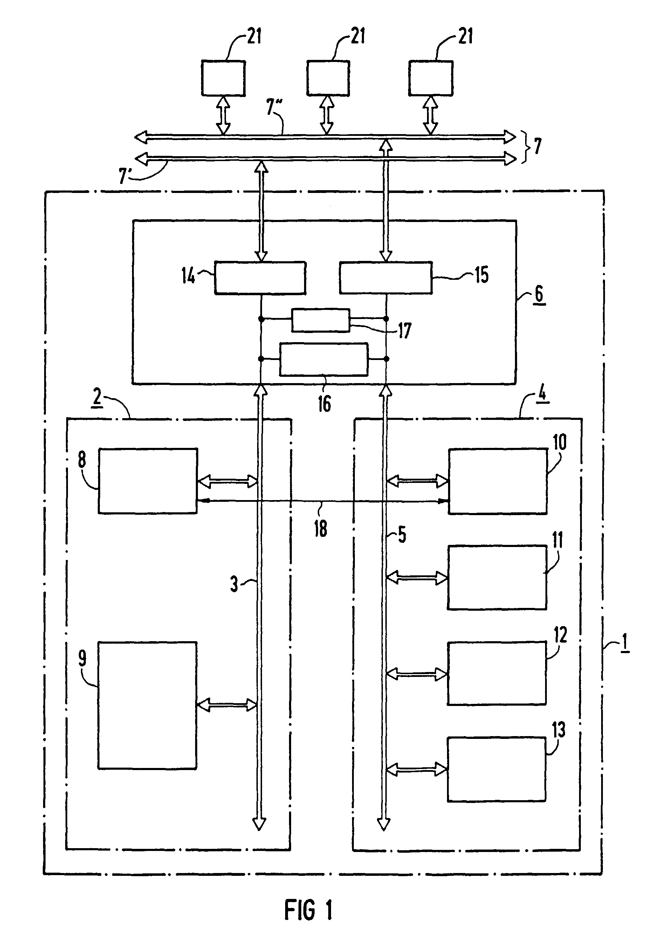

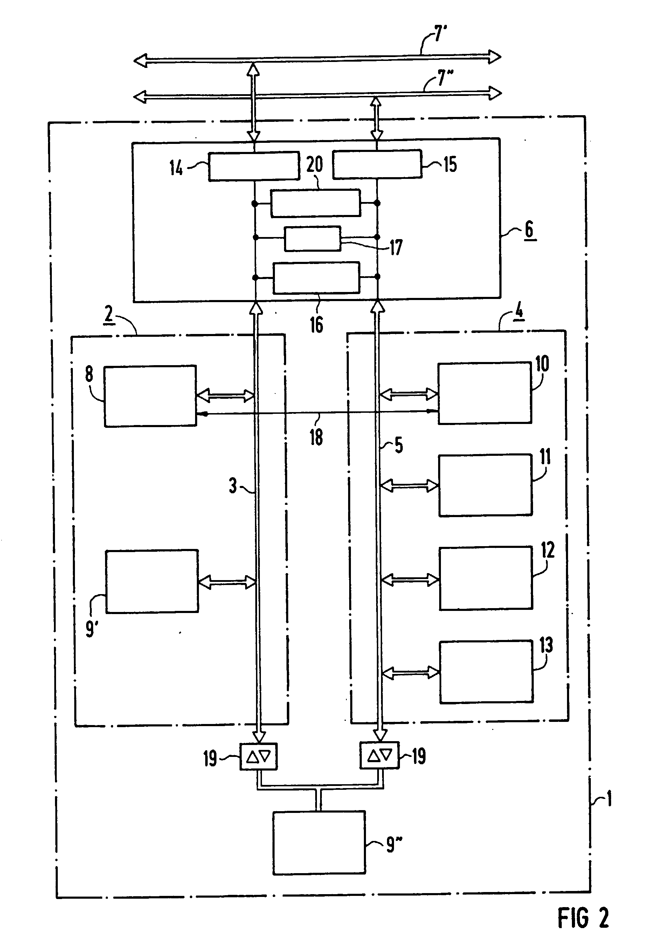

- FIG 1 und 2: je ein Blockschaltbild der Zentraleinheit einer speicherprogrammierbaren Steuerung.

Gemäß FIG 1 weist die Zentraleinheit 1 einer speicherprogrammierbaren Steuerung ein Steuerungsprozessorsystem 2 mit einem internen Bus 3 und ein Restprozessorsystem 4 mit einem internen Bus 5 auf. Die Prozessorsysteme 2, 4 sind über den Schnittstellenbaustein 6 mit einem externen Bussystem 7 verbunden. An das Bussystem 7, das aus dem Steuerungsbus 7' und dem Restbus 7'' besteht, sind in FIG 1 nur schematisch dargestellte periphere Einheiten 21, z. B. Eingabemodule, Ausgabemodule, Reglerbaugruppen usw. angeschlossen.

Das Steuerungsprozessorsystem 2 weist außer dem internen Bus 3 einen Steuerungsprozessor 8 und einen oder mehrere Speicher 9 auf. Optional kann das Steuerungsprozessorsystem 2 weitere Bestandteile enthalten, z. B. einen nicht dargestellten Koprozessor oder direkte Peripherieanschlüsse. Das Steuerungsprozessorsystem 2 nimmt alle Steuerungsaufgaben wahr, die eine Echtzeitreaktion erfordern, also z. B. das Abarbeiten des Anwenderprogramms, den Prozeßabbildtransfer oder Alarmreaktionen. Der Steuerungsprozessor 8 ist ein Spezialprozessor, vorzugsweise ein anwendungsspezifischer integrierter Schaltkreis (ASIC). Dadurch ist ein optimaler Zuschnitt des Steuerungsprozessors 8 auf Steuerungsaufgaben als solche und die verwendete Steuerungsprogrammiersprache in besonderem möglich.

Das Restprozessorsystem 4 weist ebenfalls einen Restprozessor 10 auf. Dieser Restprozessor 10 ist vorzugsweise ein Standardmikroprozessor, z. B. ein Siemens 80166. Weiterhin weist das Restprozessorsystem 4 ein RAM 11 und EPROM 12 auf. Zusätzlich ist an den Bus 5 noch ein Anwendermodul 13 ankoppelbar, das entweder als gepuffertes RAM oder als löschbarer Festwertspeicher (EPROM, EEPROM, Flash-EPROM) ausgebildet ist. Das Restprozessorsystem 4 ist von dem Steuerungsprozessorsystem 2 getrennt.

Das Restprozessorsystem 4 nimmt alle Aufgaben wahr, die nicht direkt mit zeitkritischen Steuerungsaufgaben verbunden sind. Es sind dies beispielsweise die Kommunikation mit anderen Zentraleinheiten, das Nachladen von Programmen oder der nicht steuerungsbezogene Datenverkehr mit den peripheren Einheiten. Die der Übersichtlichkeit halber nicht dargestellten Schnittstellen zu einem Programmiergerät und zu anderen Zentraleinheiten sind daher Teil des Restprozessorsystems 4.

Die Prozessorsysteme 2, 4 sind, wie eingangs erwähnt, über den Schnittstellenbaustein 6 an das Bussystem 7 angeschlossen. Der Zugriff auf das Bussystem 7 erfolgt dabei über die Controller 14, 15, die integrale Bestandteile des Schnittstellenbausteins 6 sind.

Weiterhin weist der Schnittstellenbaustein 6 ein sperrbares Koppelelement 16 auf, über das die Busse 3 und 5 miteinander verbindbar sind. Das Koppelelement 16 ist beispielsweise ein Tristate-HCMOS-Treiber. Mittels des Koppelelements 16 ist es möglich, daß der Restprozessor 10 auf den Bus 3 des Steuerungsprozessorsystems 2 zugreift. Dadurch kann z.B. während des Hochlaufens der Zentraleinheit 1 das Betriebssystem, das im EPROM 12 remanent abgespeichert ist, vom EPROM 12 in den Speicher 9 des Steuerungsprozessorsystems 2 kopiert werden.

Ferner weist der Schnittstellenbaustein 6 ein dual ported RAM 17 auf. Auf das dual ported RAM 17 können sowohl der Steuerungsprozessor 8 als auch der Restprozessor 10 zugreifen. Mittels des dual ported RAMs 17 und der Steuerleitungen 18 können die Prozessoren 8, 10 sich gegenseitig koordinieren.

Auch der Schnittstellenbaustein 6 ist vorzugsweise ein anwendungsspezifischer integrierter Schaltkreis (ASIC).

Beim Hochlaufen der Zentraleinheit 1 intialisiert sich zunächst der Restprozessor 10. Nach dieser Eigeninitialisierung kopiert der Restprozessor 10, wie obenstehend erwähnt, das Betriebssystem aus dem EPROM 12 in den Speicher 9. Sodann stößt der Restprozessor 10 über eine der Steuerleitungen 18 den Steuerungsprozessor 8 an, so daß dieser sich gegebenenfalls initialisieren kann und sodann mit der Abarbeitung des Steuerungsprogramms beginnen kann.

Während des Normalbetriebs der Zentraleinheit 1 arbeitet der Steuerungsprozessor 8 das Anwenderprogramm ab. Der Restprozessor 10 nimmt die Verwaltungs- und Kommunikationsaufgaben wahr. Der Restprozessor 10 kommuniziert beispielsweise mit einem nicht dargestellten Programmiergerät. Manche Kommunikationsaufträge kann der Restprozessor 10 allein abarbeiten, für andere Kommunikationsaufträge dagegen ist eine Mitwirkung des Steuerungsprozessors 8 erforderlich. Hierzu speichert der Restprozessor 10 im dual ported RAM 17 die Daten ab, die der Steuerungsprozessor 8 zur Bearbeitung des Kommunikationsauftrags benötigt. Sodann sendet der Restprozessor 10 ein Interruptsignal über eine der Steuerleitungen 18 an den Steuerungsprozessor 8. Der Steuerungsprozessor 8 liest daraufhin die im dual ported RAM 17 abgespeicherten Daten aus und arbeitet den Kommunikationsauftrag ab. Nach der Abarbeitung des Kommunikationsauftrages speichert der Steuerungsprozessor 8 das Ergebnis im dual ported RAM 17 ab und sendet ein Interruptsignal über eine der Steuerleitungen 18 an den Restprozessor 10. Der Restprozessor 10 liest sodann das Ergebnis der Kommunikation aus dem dual ported RAM 17 aus und wickelt den Kommunikationsauftrag weiter ab. Der Steuerungsprozessor 8 setzt die Abarbeitung des Anwenderprogramms fort.

Im Einzelfall kann eine Kommunikation aber auch vom Steuerungsprozessor 8 angestoßen werden. In diesem Fall legt selbstverständlich zuerst der Steuerungsprozessor 8 Daten im dual ported RAM 17 ab und beauftragt dann den Restprozessor 10 über eine der Interruptleitungen 18 mit der Ausführung des Auftrages.

Das Laden bzw. Nachladen des Anwenderprogrammes in den Speicher 9 geschieht auf Initiative des Steuerungsprozessors 8. Hierzu legt der Steuerungsprozessor 8 den Auftrag im dual ported RAM 17 ab und stößt über eine der Leitungen 18 den Restprozessor 10 an. Der Restprozessor 10 liest einen Teil des angeforderten Anwenderprogrammes aus dem Anwendermodul 13 aus und speichert diesen Teil im dual ported RAM 17 ab. Sodann wird über eine der Steuerungsleitungen 18 wieder ein Interruptsignal vom Restprozessor 10 an den Steuerungsprozessor 8 übermittelt. Der Steuerungsprozessor 8 liest daraufhin das dual ported RAM 17 aus und speichert die Daten im Speicher 9 ab. Dieser Vorgang wiederholt sich, bis das gesamte angeforderte Anwenderprogramm in den Speicher 9 übertragen ist.

Wie obenstehend ausgeführt, beeinflußt das Anwenderprogramm den Restprozessor 10 nur insofern, als der Restprozessor 10 standardisierte, erprobte Aufträge vom Steuerungsprozessor 8 erhält. Fehler im Anwenderprogramm können daher nicht zu Fehlfunktionen des Restprozessors 10 führen. Der Restprozessor 10 ist dadurch in der Lage, die Zentraleinheit 1 inclusive des Steuerungsprozessorsystems 2 zu überwachen. Das Restprozessorsystem 4 ist also als Mastersystem zur Überwachung der Zentraleinheit 1 ausbildbar.

Wie obenstehend erwähnt, arbeiten der Steuerungsprozessor 8 und der Restprozessor 10 parallel. Hierbei kann es vorkommen, daß sowohl der Steuerungsprozessor 8 als auch der Restprozessor 10 auf das Bussystem 7 zugreifen wollen. Durch die Aufspaltung des Bussystems 7 in zwei getrennte, den jeweiligen Prozessorsystemen 2, 4 zugeordnete Teilbusse 7', 7" können jedoch beide Prozessorsysteme 2, 4 gleichzeitig auf das Bussystem 7 zugreifen. Zugriffe auf dieselbe Peripherieeinheit sind jedoch nur zulässig, wenn auch die Baugruppe entsprechend ausgestaltet ist. Ein gleichzeitiger Zugriff beider Prozessorsysteme 2, 4 auf dieselbe Peripherieeinheit tritt in der Praxis jedoch nur sehr selten auf.

Darüber hinaus kann für Spezialaufgaben das Restprozessorsystem 4 auch mit dem Steuerungsbus 7' und das Steuerungsprozessorsystem 2 auch mit dem Restbus 7" verbindbar sein.

Bei der vorliegenden Erfindung sind Zugriffskonflikte beim Zugreifen auf das Bussystem 7 praktisch ausgeschlossen. Darüber hinaus ist durch die Controller 14, 15 eine Trennung des Bussystems 7 von den internen Bussen 3, 5 gewährleistet. Die Prozessorsysteme 2, 4 können daher unabhängig vom Aufbau des Bussystems 7 entwickelt werden, z.B. als 32-Bit-Systeme, auch wenn das Bussystem 7 ein 8-Bit-System ist. Die Prozessorsysteme 2, 4 sind auch unabhängig vom Bussystem 7 betreibbar, z.B. mit 20 MHz, auch wenn Zugriffe auf das Bussystem 7 erheblich länger dauern. Eine eventuell nötige Zwischenspeicherung bzw. Pufferung von Daten übernehmen dabei die Controller 14, 15.

In FIG 2 ist eine weitere Verbesserung der Erfindung dargestellt. Gemäß FIG 2 ist der Speicher 9 des Steuerungsprozessorsystems 2 in zwei Teilspeicher 9', 9" aufgespalten. Der Teilspeicher 9" ist dabei über bidirektionale, sperrbare Koppelelemente 19, typisch HCMOS-Treiber, mit beiden Prozessorsystemen 2, 4 verbunden. Mittels dieser Konfiguration ist es einfacher, Daten, z.B. das Anwenderprogramm vom Anwendermodul 13, in den Speicher 9" einzuspeichern. Insbesondere wenn im Speicher 9' das Betriebssystem des Steuerungsprozessors 8 und im Speicher 9" das Anwenderprogramm des Steuerungsprozessors 8 abgespeichert ist, kann auch während der Abarbeitung von Betriebssystemfunktionen durch den Steuerungsprozessor 8 das Anwenderprogramm durch den Restprozessor 10 nachgeladen werden. Dadurch ergibt sich eine zusätzliche Leistungssteigerung der Zentraleinheit 1.

Alternativ oder zusätzlich kann der Schnittstellenbaustein 6 einen dritten Controller 20 aufweisen, der mit den beiden Prozessorsystemen 2, 4 verbunden ist. Der Controller 20 ist vorzugsweise ebenfalls in den Schnittstellenbaustein 6 integriert. Mittels des Controllers 20 kann die nötige Restkommunikation zwischen dem Steuerungsprozessorsystem 2 und dem Restprozessorsystem 4 noch effizienter abgewickelt werden.

## Patentansprüche

1. Prozeßsteuerungssystem, das aus einer Zentraleinheit (1) und einer Anzahl peripherer Einrichtungen besteht, die mit der Zentraleinheit (1) über ein Bussystem (7) verbunden sind,
- wobei die Zentraleinheit (1) mindestens ein Steuerungsprozessorsystem (2) mit einem Steuerungsprozessor (8) zur Bearbeitung von Echtzeitaufgaben sowie mindestens ein weiteres, vom Steuerungsprozessorsystem (2) getrenntes Restprozessorsystem (4) mit einem Restprozessor (10) zur Bearbeitung von zeitungebundenen Aufgaben aufweist, dadurch gekennzeichnet, daß
- das Bussystem (7) einen Steuerungsbus (7') und einen Restbus (7") aufweist,
- der Steuerungsbus (7') mit dem Steuerungsprozessorsystem (2) und der Restbus (7") mit dem Restprozessorsystem (4) verbunden ist und
- zumindest ein Teil der peripheren Einheiten mit beiden Bussen (7',7'') verbunden ist.

2. Prozeßsteuerungssystem nach Anspruch 1, **dadurch gekennzeichnet**, daß die Prozessorsysteme (2,4) über mindestens einen Controller (14,15) mit dem Bussystem (7) verbunden sind.

3. Prozeßsteuerungssystem nach einem der obigen Ansprüche, **dadurch gekennzeichnet**, daß es mindestens einen Controller (20) aufweist, der mit den Prozessorsystemen (2,4) verbunden ist.

4. Prozeßsteuerungssystem nach Anspruch 2 oder 3, **dadurch gekennzeichnet**, daß die Controller (14,15,20) in einen Schnittstellenbaustein (6) integriert sind.

5. Prozeßsteuerungssystem nach einem der obigen Ansprüche, **dadurch gekennzeichnet,** daß das Steuerungsprozessorsystem (2) und das Restprozessorsystem (4) über sperrbare Koppelelemente (19), z. B. Tristate-HCMOS-Treiber (19), miteinander verbindbar sind.

6. Prozeßsteuerungssystem nach Anspruch 4 und 5, **dadurch gekennzeichnet,** daß die sperrbaren Koppelelemente (16) in den Schnittstellenbaustein (6) integriert sind.

7. Prozeßsteuerungssystem nach einem der obigen Ansprüche, **dadurch gekennzeichnet,** daß die Zentraleinheit (1) mindestens einen Zweiwegspeicher (9",17) mit zwei Zugriffswegen, z. B. ein dual-ported-RAM (17), aufweist, wobei ein Zugriffsweg mit dem Steuerungsprozessorsystem (2) und ein Zugriffsweg mit dem Restprozessorsystem (4) verbunden ist.

8. Prozeßsteuerungssystem nach Anspruch 4 und 7 oder Anspruch 6 und 7, **dadurch gekennzeichnet,** daß der Zweiwegspeicher (17) in den Schnittstellenbaustein (6) integriert ist.

9. Prozeßsteuerungssystem nach Anspruch 4, 6 oder 8, **dadurch gekennzeichnet,** daß der Schnittstellenbaustein (6) als anwendungsspezifischer Schaltkreis ausgebildet ist.

10. Prozeßsteuerungssystem nach einem der obigen Ansprüche, **dadurch gekennzeichnet,** daß der Steuerungsprozessor (8) und der Restprozessor (10) über Steuerleitungen (18) miteinander verbunden sind.

11. Prozeßsteuerungssystem nach einem der obigen Ansprüche, **dadurch gekennzeichnet,** daß der Steuerungsprozessor (8) ein, vorzugsweise als anwendungsspezifischer Schaltkreis ausgebildeter, Spezialprozessor und der Restprozessor (10) ein Standard-Mikroprozessor ist.

12. Prozeßsteuerungssystem nach einem der obigen Ansprüche, **dadurch gekennzeichnet**, daß das Restprozessorsystem (4) als Mastersystem zur Überwachung der Zentraleinheit (1) ausgebildet ist.

13. Prozeßsteuerungssystem nach einem der obigen Ansprüche, **dadurch gekennzeichnet**, daß die Prozessorsysteme (2,4) mindestens je einen Speicher (9,9', 11,12,13) aufweisen.

## Claims

1. Process control system which consists of a central unit (1) and a number of peripheral devices, which are connected to the central unit (1) by way of a bus system (7),
- with the central unit (1) having at least one control processor system (2), which has a control processor (8) for processing real-time tasks, and also having at least one further remainder processor system (4), which is separate from the control processor system (2) and has a remainder processor (10) for processing tasks which are not time-critical, characterised in that
- the bus system (7) has a control bus (7') and a remainder bus (7"),
- the control bus (7') is connected to the control processor system (2), and the remainder bus (7") is connected to the remainder processor system (4) and
- at least one portion of the peripheral units is connected to both buses (7', 7").

2. Process control system according to claim 1, characterised in that the processor systems (2, 4) are connected to the bus system (7) by way of at least one controller (14, 15).

3. Process control system according to one of the above claims, characterised in that said process control system has at least one controller (20), which is connected to the processor systems (2, 4).

4. Process control system according to claim 2 or 3, characterised in that the controllers (14, 15, 20) are integrated in an interface module (6).

5. Process control system according to one of the above claims, characterised in that the control processor system (2) and the remainder processor system (4) can be connected to each other by way of blockable coupling elements (19), for example tristate-HCMOS drivers.

6. Process control system according to claims 4 and 5, characterised in that the blockable coupling elements (16) are integrated in the interface module (6).

7. Process control system according to one of the above claims, characterised in that the central unit (1) has at least one two way memory (9", 17) having two access paths, for example a dual ported RAM (17), with one access path being connected to the control processor system (2) and one access path being connected to the remainder processor system (4).

8. Process control system according to claims 4 and 7 or to claims 6 and 7, characterised in that the two way memory (17) is integrated in the interface module (6).

9. Process control system according to claim 4, 6 or 8, characterised in that the interface module (6) is developed as an application specific integrated circuit.

10. Process control system according to one of the above claims, characterised in that the control processor (8) and the remainder processor (10) are connected to each other via control lines (18).

11. Process control system according to one of the above claims, characterised in that the control processor (8) is a special processor, preferably developed as an application specific integrated circuit, and the remainder processor (10) is a standard microprocessor.

12. Process control system according to one of the above claims, characterised in that the remainder processor system (4) is developed as a master system for monitoring the central unit (1).

13. Process control system according to one of the above claims, characterised in that the processor systems (2, 4) each have at least one memory (9, 9', 11, 12, 13).

## Revendications

1. Système de commande de processus, qui est constitué d'une unité centrale (1) et d'un certain nombre de dispositifs périphériques reliés à l'unité centrale (1) par l'intermédiaire d'un système (7) de bus,
- dans lequel l'unité centrale (1) comporte au moins un système (2) de processeur de commande comportant un processeur (8) de commande destiné au traitement des tâches en temps réel ainsi qu'au moins un autre système (4) de processeur résiduel distinct du système (2) de processeur de commande et comportant un processeur (10) résiduel destiné au traitement de tâches non liées au temps, caractérisé en ce que
- le système (7) de bus comporte un bus (7') de commande et un bus (7") résiduel,
- le bus (7') de commande est relié au système (2) de processeur de commande et le bus résiduel (7") est relié au système (4) de processeur résiduel,
- au moins une partie des unités périphériques est reliée aux deux bus (7', 7").

2. Système de commande de processus suivant la revendication 1, caractérisé en ce que les systèmes (2, 4) de processeur sont reliés au système (7) de bus par l'intermédiaire d'au moins un dispositif (14, 15) de contrôle.

3. Système de commande de processus suivant l'une des revendications précédentes,
caractérisé en ce qu'il comprend au moins un dispositif (20) de contrôle, qui est relié aux systèmes (2, 4) de processeur.

4. Système de commande de processus suivant la revendication 2 ou 3, caractérisé en ce que les dispositifs (14, 15, 20) de contrôle sont intégrés à un composant (6) d'interface.

5. Système de commande de processus suivant l'une des revendications précédentes,
caractérisé en ce que le système (2) de processeur de commande et le système (4) de processeur résiduel peuvent être reliés l'un à l'autre par l'intermédiaire d'éléments (19) de couplage pouvant être bloqués, par exemple par l'intermédiaire d'étage d'attaque (19) HCMOS à trois états.

6. Système de commande de processus suivant les revendications 4 et 5,
caractérisé en ce que les éléments (16) de couplage pouvant être bloqués sont intégrés au composant (6) d'interface.

7. Système de commande de processus suivant l'une des revendications précédentes,
caractérisé en ce que l'unité centrale (1) comporte au moins une mémoire (9", 17) à double accès, par exemple une RAM (17) à double voie d'accès, une voie d'accès étant reliée au système (2) de processeur de commande et une voie d'accès étant reliée au système (4) de processeur résiduel.

8. Système de commande de processus suivant les revendications 4 et 7 ou 6 et 7, caractérisé en ce que la mémoire (17) à double voie d'accès est intégrée au composant (6) d'interface.

9. Système de commande de processus suivant la revendication 4, 6 ou 8,
caractérisé en ce que le composant (6) d'interface est sous forme d'un circuit intégré à application spécifique.

10. Système de commande de processus suivant l'une des revendications précédentes,
caractérisé en ce que le processeur (8) de commande et le processeur (10) résiduel sont reliés l'un à l'autre par l'intermédiaire de conducteurs (18) de commande.

11. Système de commande de processus suivant l'une des revendications précédentes,
caractérisé en ce que le processeur (8) de commande est un processeur spécial sous forme de préférence d'un circuit intégré à application spécifique et le processeur résiduel (10) est un microprocesseur standard.

12. Système de commande de processus suivant l'une des revendications précédentes,
caractérisé en ce que le système (4) de processeur résiduel est sous forme de système maître destiné au contrôle de l'unité centrale (1).

13. Système de commande de processus suivant l'une des revendications précédentes,
caractérisé en ce que les systèmes (2, 4) de processeur comportent au moins chacun une mémoire (9, 9', 11, 12, 13).
